**Europäisches Patentamt**

**European Patent Office**

**Office européen des brevets**

(19)

(11) Publication number: **0 024 134 B1**

(12) **EUROPEAN PATENT SPECIFICATION**

(45) Date of publication of patent specification: **09.02.83**

(21) Application number: **80302548.5**

(22) Date of filing: **25.07.80**

(51) Int. Cl.³: **C 08 G 65/32, C 10 L 1/22**

(54) **Process for the production of polyether carbamates useful as deposit control additives for hydrocarbon fuels.**

(30) Priority: **09.08.79 US 65247**

(43) Date of publication of application:
**25.02.81 Bulletin 81/8**

(45) Publication of the grant of the patent:
**09.02.83 Bulletin 83/6**

(84) Designated Contracting States:
**BE DE FR GB IT NL SE**

(56) References cited:
**US - A - 2 842 433**
**US - A - 4 160 648**

(73) Proprietor: **CHEVRON RESEARCH COMPANY**
**525 Market Street**
**San Francisco California 94120 (US)**

(72) Inventor: **Franklin, Frederick Carl**
**2413 Tomar Court**
**Pinole California 94564 (US)**
Inventor: **Lewis, Robert Allen**
**1801 San Lorenzo Avenue**
**Berkeley California 94707 (US)**

(74) Representative: **Kosmin, Gerald Emmanuel et al,**
**HASELTINE, LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Process for the production of polyether carbamates useful as deposit control additives for hydrocarbon fuels

This invention relates to a process for the production of polyether (or polyoxyalkylene) carbamates which, when incorporated in hydrocarbon fuels employed in internal combustion engines, serve to reduce formation of the deposits in intake systems, for example carburettor ports and intake valves, without contributing to combustion chamber deposits which cause an increase in the octane requirement of the engine. Fuel additives of this type are described in our United States Patent No. 4,160,648.

Particularly effective additives of this type are monocarbamates produced by reacting polyalkylene polyamines with polyether chloroformates. By "monocarbamate" is meant a carbamate containing a single polyamine moiety linked at an amine nitrogen atom through a carbamate linkage to the oxygen atom of a polyether alcohol. In order to produce substantial amounts of monocarbamate rather than dicarbamate (in which two polyether alcohol moieties are bound to the polyamine at different reactive amine nitrogen atoms), it is necessary to use a large excess of polyalkylene polyamine. In the reaction between polyalkylene polyamine and polyether chloroformate, polyalkylene polyamine hydrochloride and the desired polyether carbamate product are produced in equimolar amounts. Chloride ion is undesirable in automotive fuels, since it causes corrosion. It may also cause plugging of process equipment during manufacture and should therefore be reduced to very low levels before final separation of the monocarbamate product.

The removal of the hydrochloride salt with recovery of the excess polyalkylene polyamine poses formidable problems. Phase separation between a hydrocarbon phase containing the carbamate product and a polyalkylene polyamine phase containing the hydrochloride salt is a possible procedure. However, the polyalkylene polyamine is in general soluble in the hydrocarbon phase so that the use of a large excess of the polyamine results in a large hydrocarbon phase and a small hydrochloride-containing phase. The hydrochloride-containing phase then forms small droplets distributed through the hydrocarbon phase, fails to agglomerate and/or settles too slowly to allow continuous operation. Washing the product with sufficient water to remove the hydrochloride, or a combination of alcohol and water, has been used in the past, but produces a polyamine - water - polyamine hydrochloride separation problem which is complicated by the large amounts of water present. (If water alone is used in washing, it tends to form an emulsion unless some low-molecular-weight alkanol is also present. This presents further separational complexity.) The substantially complete removal of chloride ion from the reaction product is required for efficient separation of the carbamate product by distillation and the use of the carbamate in gasoline fuels. A stringent upper limit of about 10 ppm of chloride ion is normally specified for the hydrocarbon phase containing the carbamate.

It is an object of the present invention to provide a process for the production of polyoxyalkylene carbamates, particularly monocarbamates, which allows for efficient separation of the product mixture into a hydrocarbon phase containing the carbamate product and a polyalkylene polyamine phase containing the polyalkylene polyamine hydrochloride salt, so that the carbamate product can be recovered substantially free from the hydrochloride salt.

According to the present invention, the reaction of a polyether chloroformate with a polyalkylene polyamine to form a polyether monocarbamate is characterised in that the polyether chloroformate reactant is employed in a hydrocarbon solvent and the polyalkylene polyamine reactant is employed in the presence of an amount of water such that after the reaction of the polyether chloroformate with the polyalkylene polyamine, the resulting product mixture separates into a hydrocarbon phase comprising hydrocarbon solvent, monocarbamate product and polyalkylene polyamine and an aqueous phase comprising polyalkylene polyamine, polyalkylene polyamine hydrochloride and water, form which hydrocarbon phase the monocarbamate product can be recovered substantially free from chloride ion. Thus residual chloride ion present in the hydrocarbon phase may be removed by washing, for example with polyalkylene polyamine containing a limited amount of water, and separating the resulting two-phase mixture, and thereafter subjecting the upper hydrocarbon phase so obtained to stripping, generally under vacuum, to remove hydrocarbon solvent, polyamine and water from the desired monocarbamate product.

The polyalkylene polyamine present in the aqueous phase may be recovered by vaporization and recycled as polyalkylene polyamine reactant. A portion of this recovered polyamine, preferably containing from 10 to 20 weight percent of water, may be mixed with the hydrocarbon phase from the first phase separation to form said two-phase mixture which is allowed to separate preferably at a temperature in the range from 80 to 110°C.

In the process of the present invention, advantage is taken of the solubility of polyalkylene polyamine in water to create an aqueous polyalkylene polyamine hydrochloride phase which separates from the hydrocarbon phase easily and quickly enough for continuous operation. The rapid separation is accomplished by the addition of a small amount of water to a very large excess of the polyamine prior to the reaction between the polyamine and the polyether chloroformate. The addition of a limited amount of water prevents the dispersion of the hydrochloride containing phase as droplets in the hydrocarbon phase, yet produces no emulsion.

This process for the production of a polyether monocarbamate preferably comprises as a first step very rapidly contacting and thoroughly mixing at a temperature of from 0°C to 150°C reactant streams of respectively polyether chloroformate and polyalkylene polyamine to form a product mixture. The reactant stream of polyether chloroformate preferably contains from 20 to 80, advantageously 40 to 60, weight percent of polyether chloroformate in a hydrocarbon solvent. The reactant stream of polyalkylene polyamine preferably contains from 6 to 35, advantageously 10 to 20, weight percent of water. The mol ratio of said polyamine to said chloroformate in the streams is generally in the range from 5:1 to 45:1, preferably 10:1 to 30:1. In a second step, said product mixture is allowed to separate at a temperature in the range from 20 to 120°C., preferably 80 to 110°C., into two phases, namely a hydrocarbon phase principally comprising said hydrocarbon solvent, polyether monocarbamate product and excess polyamine, and an aqueous phase principally comprising water, excess polyamine and polyalkylene polyamine hydrochloride.

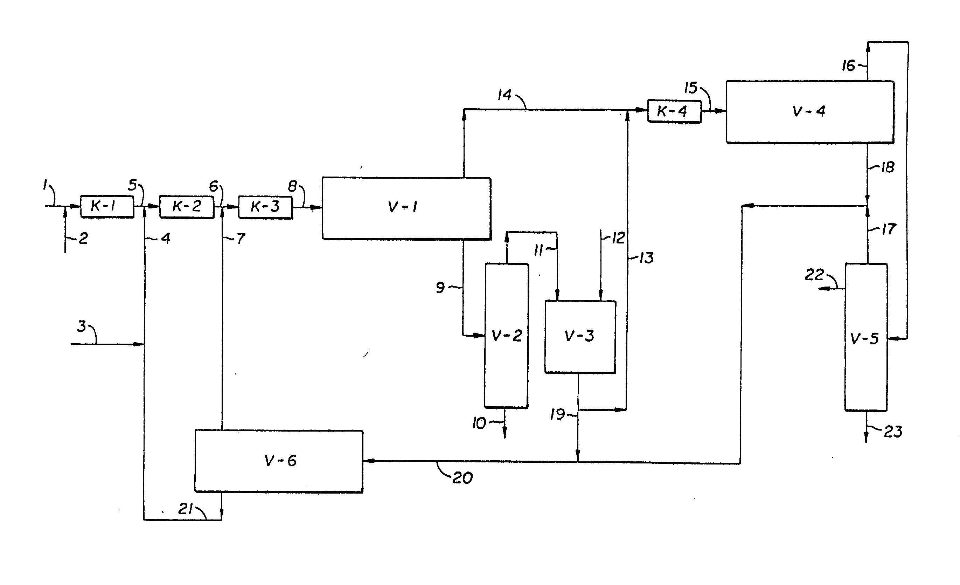

For a better understanding of the invention and to show how the same may be carried into effect, a continuous process for reacting a polyether chloroformate with a polyalkylene amine will now be described, by way of example, with reference to the accompanying drawing which is a schematic flow diagram of the process.

In this process, the polyalkylene polyamine is ethylenediamine which reacts with a polyether chloroformate, namely alkylphenol poly-(oxybutylene) chloroformate having a molecular weight of about 1800. The chloroformate reactant is introduced through line 1 and blended in static mixer K—1 with aromatic solvent fed from line 2 in about equal amounts by weight. The chloroformate/solvent blend is then sent via line 5 to be mixed and reacted with the polyamine (containing a limited amount of water) from line 4 in static mixer K—2. The polyamine consists of fresh made-up polyamine from line 3 and recycled polyamine from the product still overhead separator V—6 from line 21. The exothermic reaction of chloroformate and polyamine is very rapid and is completed as soon as the streams are mixed. Speed of mixing is important to the success of the reaction step which has as its object the production of a monocarbamate product. The polyamine feed to the reaction mixer K—2 is set by operating conditions downstream in the separators V—1 and V—4 rather than the requirements of the reaction itself. Under normal operating conditions with solvent recycle, the reaction is carried out at a polyamine/chloroformate mol ratio of about 20:1. This ratio is set to provide sufficient amounts of a polyamine-rich phase for good chloride removal downstream in the first separator V—1. When the plant is operated without solvent recycle, a polyamine/chloroformate ratio of 30:1 is preferred to permit good phase separation in the downstream separators. Consequently, the polyamine/chloroformate ratios in the reaction step are much higher than necessary to achieve a high yield of monocarbamate. Ratios above 5:1 only marginally improve monocarbamate yield as long as rapid mixing of polyamine and chloroformate is achieved. The reaction mixture from K—2 by way of line 6 is combined with recycle solvent from line 7 in static mixer K—3 and sent via line 8 to the first stage separator V—1. The mixture separates in V—1 into relatively clear upper and lower phases. The normal operating temperature for the first stage separator V—1 is about 90°C, but higher temperatures, e.g. up to about 120°C, may be used provided that the pressure is adequate to prevent boiling. The water content of the polyamine-rich phase in the separator, while not directly controlled at this point, is an important parameter effecting separator performance. Under normal operating conditions the lower phase in V—1 will contain about 14% water. Both higher and lower levels will tend adversely to affect separator performance. A reasonable operating range under these conditions is from 11—18% water by weight. The density difference between the upper and lower phases in V—1 is very small, there being only about 0.05 difference in specific gravity between them. Consequently, any temperature gradient in the separator could easily have an adverse effect on performance and the vessel is therefore completely insulated to minimize heat loss. The hydrocarbon-rich upper phase from the separator normally contains about 100 ppm chloride. This upper phase flows via line 14 to the second separation stage where the chloride content is further reduced. Most of the free polyamine in the lower phase from V—1 is recovered by flashing the lower phase taken via line 9 under vacuum conditions in V—2. This polyamine-rich lower phase from the separator V—1 contains the bulk of the polyamine hydrochloride. The polyamine hydrochloride waste stream is removed as the flash bottoms product by line 10. The flashed polyamine is condensed and collected in the polyamine wash surge V—3. Make-up water is added to V—3 via line 12.

Residual chloride in the upper hydrocarbon-rich phase from the first stage separator is reduced to less than 10 ppm by washing with polyamine containing limited amounts of water, and separating the resultant two-phase mixture. Polyamine fed to the wash mixture in K—4 is pumped from the polyamine wash surge V—3 via line 13, heated to the separator operating temperature (90°C) and mixed with the product/solvent phase from V—1 moving via line 14. The polyamine/product wash mixture from K—4 moves via line 15 into the second-stage separator V—4 which normally operates at the same temperature as V—1. Phase separation in this second stage is more difficult than the first stage due largely to an even smaller difference in density between the phases. V—4 is also fully insulated. The water content of the polyamine wash to the polyamine wash mixer K—4 is normally controlled at about 16 weight percent. Control is achieved by monitoring the water content in V—3 and adjusting water make-up as required. Control of water content at this point also assures that' water content of the polyamine feed to the first stage separator via lines 19, 20, 21 and 4 is correct. The performance of both the first- and second-stage separators is optimized by water content of about 16 weight percent water in the polyamine stream. A preferred operating range is from 10—20 weight percent water. The upper phase from V—4 flows by way of line 16 to the product still V—5. In the product still V—5 polyamine and water are removed from the final carbamate product in order to meet the specifications for water-soluble base and water content. Vacuum operation is achieved by applying a vacuum via line 22. The overhead from the product still V—5, via line 17, consisting of polyamine, solvent and water, and the lower polyamine-rich phase from the second-stage separator V—4, via line 18, are combined with the polyamine wash bypass from V—3, via line 19, and are set through a condenser before flowing by way of line 20 to the product still overhead separator V—6 where phase separation is accomplished. The upper solvent phase in V—6 provides solvent which is recycled through line 7 to be mixed with the reaction mixture in static mixer K—3. The lower polyamine phase in V—6 is combined via line 21 with makeup polyamine from line 3 and pumped to the front end to provide the polyamine feed to reaction mixture K—2. The net bottoms product, namely the required polyether monocarbamate, from the product still exits at line 23.

The process of the present invention may be effected with a polyether chloroformate of average molecular weight in the range from 500 to 10,000, preferably from 500 to 5000. The hydrocarbyl-terminated poly(oxyalkylene)-polymers from which the chloroformate may be formed are monohydroxy compounds, i.e. alcohols (often termed monohydroxy polyethers), preferably composed of $C_2$—$C_5$ oxyalkylene units. Hydrocarbyl-terminated poly(oxyalkylene) alcohols can be produced by the addition of lower alkylene oxides, such as propylene oxide, to a hydroxy compound (ROH wherein R is preferably a $C_1$—$C_{30}$ alkyl, aryl, or

aralkyl group) under polymerisation conditions. Preferably, the polymeric chloroformate is formed from the aforesaid polymers by reacting the hydroxyl-containing polymer with phosgene. A preferred polyether chloroformate is an alkylphenyl-terminated poly(oxyalkylene)-chloroformate, such as dodecylphenyl poly-(oxybutylene)chloroformate. Preferably, the oxyalkylene units are selected from $C_2 C_5$ oxyalkylene units, for example oxypropylene, oxybutylene and oxypentylene.

Polyalkylene polyamines which may be employed in the process of the invention contain from 2 to 10 carbon atoms and from 2 to 5 nitrogen atoms, preferably from 2 to 6 carbon atoms and from 2 to 4 nitrogen atoms. Such polyamines are water soluble. At least one of the amino nitrogens in the polyamine is a primary or secondary amino nitrogen. Mixtures of polyamines may also be used. The polyamine may be substituted by lower hydrocarbyl groups, or other substituents selected from lower acyl, keto, hydroxy, nitro and cyano groups. Preferably the polyalkylene polyamine contains $C_2$—$C_6$ alkylene units, for example ethylenediamine, diethylenetriamine, triethylene-tetraamine, tetraethylenepentamine, dimethyl-aminopropylamine, N - (2 - hydroxyethyl)di-ethylenetriamine, propylenediamine, dipropylene-triamine and tripropylenetetraamine. More pre-ferably the polyalkylene polyamine is an ethylene or propylene polyamine, such as ethylene-diamine or dipropylenetriamine, with ethylene-diamine being the most preferred.

The hydrocarbon solvent is preferably an aromatic solvent having from 6 to 18 carbon atoms, with aromatic solvents of from 8 to 10 carbon atoms being most preferred. Such solvents are exemplified by the xylenes, ethylbenzene, cumene and other $C_9$—$C_{10}$ alkylbenzenes. Mixtures of such solvents may be used if desired.

The process of the present invention may be effected batch-wise or more advantageously in a continuous manner. In a preferred embodiment of the invention, a stream of said polyether chloroformate reactant is very rapidly contacted and thoroughly mixed with a stream of said polyalkylene polyamine reactant at a temperature in the range from 0 to 150°C for the purpose of forming the product polyether carbamate. Rapid thorough mixing is accomplished by using a static in-line mixing assembly. The duration of mixing is also important since contact time must be sufficient to permit the hydrochloride to transfer from the polyether monocarbamate product to the polyamine in a secondary reaction step. Without sufficient mixing time, excessive chloride ion remains in the hydrocarbon phase after the water-containing polyamine hydrochloride phase has separated from it. Preferably a reaction temperature of from 20 to 65°C is used. Most preferably the reaction temperature is about 25°C. The stream of polyether chloroformate reactant contains from 20—80 weight percent of said chloroformate, the remainder being made up of said hydrocarbon solvent. Preferably from 40—60 weight percent of the polyether chloroformate is present in said reactant stream. The polyamine reactant stream contains from 65 to 94% polyamine, the remainder being made up of water, i.e. 35 to 6 weight percent of water.

Surprisingly, the water has no apparent effect on the reaction, either as to rate of reaction or yield of carbamate. A small amount of water in a limited range is needed, because while insufficient water results in too small an aqueous hydrochloride-containing phase and poor chloride removal, too much water causes haziness and poor phase separation. Preferably from 80 weight percent to 90 weight percent amine and 20 weight percent to 10 weight percent water are used. Amounts of water below 6 weight percent allow too much chloride ion to reach the final product distillation, while amounts greater than 35 weight percent produce increasing amounts of haze which indicates poor separation.

The mol ratio of polyamine to polyether chloroformate in said reactant streams is generally from 5:1 to 45:1, preferably from 10:1 to 30:1.

The thoroughly mixed product mixture comprising polyether carbamate and excess polyamine as well as hydrocarbon solvent, water and an amount of polyamine hydrochloride equimolar to carbamate, is drawn into a settling vessel (separator) where the hydrochloride- and water-containing polyamine phase is permitted to separate from the lighter hydrocarbon phase. Because of the polymeric nature of the product carbamate in the upper hydrocarbon phase, improper feed mixtures can produce a high viscosity upper phase which hinders separation and removal of chloride ion. Likewise, improper feed mixtures which result in small density differences between the phases, or emulsions, or small chloride-containing phase volume relative to the upper phase volume, can also hinder phase separation. Consequently, separation temperatures and amounts of materials present, particularly the amount of water present, are critically selected to avoid these conditions. The optimum amount of water present is also related to the temperature of separation. At a separation temperature of about 90°C, water contents in the polyamine phase greater than about 35 weight percent cause too slow a separation, while less than 2 weight percent water in the polyamine phase does not yield a large enough chloride and water-containing polyamine phase. Generally, temperatures of 80°C and higher (up to 110°C) are preferred for separation, e.g. about 90°C is most preferred, but generally separation occurs at a temperature in the range from 20 to 120°C. Surprisingly, the process can be run continuously because of the short time needed for separation at about 90°C with 10—20 weight percent water in the polyamine reactant stream to the reaction mixer.

In a particularly preferred embodiment of the present invention two separations are used to ensure low residual chloride ion in the hydrocarbon phase. After an initial separation, the chloride- and water-containing polyamine phase is sent to a flash distillation vessel. It is to be understood that other polyamine recovery systems are usable within the scope of the present invention so that this choice of the polyamine recovery system is not limiting. A portion of the overhead from the flasher is combined with the hydrocarbon phase from the first separator and thoroughly mixed. The overhead contains polyamine and a limited amount of water so that the mixing serves to wash chloride ion from the hydrocarbon phase. This wash mixture is sent into a second stage of separation. This separation is effected over a similar range of temperature and water content as for the initial separation. Preferably the polyamine wash stream to the interstage wash mixer contains from 10—20 weight percent water and the separation is preferably performed at 80—110°C. In the second stage separator the water content of the mixture is even more critical than in first-stage separation in order to obtain phase separation. Too large a water content of the polyamine stream leads to increasing emulsification, but at too low water concentrations, depending on the particular polyamine, the solvent composition and concentration, the type of polyether monocarbamate, and the temperature, the two phases will have equivalent densities and will not separate at all. In a preferred case of an ethylenediamine wash, wherein the product phase comprises 50 weight percent of $C_9$—$C_{10}$ aromatic solvent and an alkylphenyl poly(oxybutylene) aminocarbamate of about 1800 molecular weight, equalization of phase densities occurs at about 6—8 weight percent water at 80°C. When the water concentration is too low the polyamine phase remains suspended as droplets or large drops in the product/solvent phase.

The hydrocarbon phase from the second separator is sent directly to a product still from which the final product carbamate is obtained as a bottoms product. The use of two stages of separation with thorough interstage washing with a polyamine-water stream serves to reduce the chloride ion concentration in the hydrocarbon phase to less than 10 ppm. Very low levels of chloride ion are preferred to prevent corrosion and plugging of the still.

The deposit control additives which can be produced by the process of the invention can be used in hydrocarbon fuels boiling in the gasoline range. Generally from 30 to 2000 ppm by weight of the additive per part by weight of the hydrocarbon fuel will be employed. If desired the deposit control additives may be formulated as a concentrate, using an inert stable oleophilic organic solvent, preferably an aliphatic or aromatic hydrocarbon solvent.

The following Examples serve to further illustrate the process of the invention. All parts are parts by weight per hour.

### Example 1

2,666 parts by weight of mixed didodecylphenyl and dodecylphenyl ether of poly-(ethyloxirane) chloroformate, having an average of 15 butylene oxide groups per molecule, were combined at 16.5°C with 2,666 parts of a $C_9$—$C_{10}$ aromatic solvent in an in-line static mixer. The resulting mixture was then mixed with 2,056 parts of a water-containing ethylenediamine (EDA) stream in a second static mixer, the reaction static mixer, to achieve nearly instantaneous mixing. The ethylenediamine comprises 216 parts of fresh make-up ethylenediamine and 1,521 parts of recycle diamine from a product still overhead separator. Sufficient water was contained in the recycle stream to give a final water concentration of about 11% water by weight relative to ethylenediamine in the EDA stream. The remainder of the EDA stream was made up of a small amount of solvent which was soluble in the recycled EDA. Complete and thorough mixing of the reactant stream took place in the static mixer, and after an additional residence time, the crude product stream was removed and combined with 1,015 parts of recycled solvent itself containing 6.5 weight percent ethylenediamine. The resulting mixture, 8,403, parts, containing 2.7 weight percent water, was then charged to the first separator. The first separator was maintained at 90°C. Separation took place rapidly and the lower phase, 1,326 parts, was withdrawn to a flash distillation vessel. This lower phase contained 14 weight percent water in a mixture consisting primarily of 145 parts of ethylenediamine hydrochloride and 938 parts of ethylenediamine. The remainder was mainly solvent. The upper phase, 7,077 parts was withdrawn for mixing with an EDA wash stream. This upper phase contained 2,686 parts of product, 3,650 parts of solvent, two parts of ethylenediamine hydrochloride and 696 parts of unreacted ethylenediamine. The water content of the upper phase was only about 0.5 weight percent. The lower phase was charged through a flash distillation vessel operating at 0,2758 bar (4 psia) with a bottoms temperature of 118°C. The high-boiling residue, 196 parts, withdrawn from the flasher contained the polyamine hydrochloride, as well as two parts of product, and 40 parts of ethylenediamine. This bottoms material was set to disposal, or was further treated for additional diamine recovery. Removal of additional ethylenediamine by simple vaporization resulted in crystallization of the stream and made handling difficult. The overhead portion from this flasher, 1,130 parts, was removed and charged to a surge vessel. A portion of the material in the surge vessel, 794 parts, containing 79 weight percent ethylenediamine, 5% solvent and 16% water, was combined with the upper phase from the first separator in a static mixing device. The combined upper phase and wash streams, 7,871 parts, containing 2% water, was charged to the second separator, maintained at 90°C. In this separator the remaining hydrochloride, two parts, was withdrawn with the lower phase, 639 parts, to be combined with the excess EDA from the surge tank. This stream also contained 489 parts of ethylenediamine and 118 parts of water (18.5 weight percent), the remainder being solvent and product. After combining this lower phase with the excess from the surge vessel, the combined stream was sent to the product still overhead separator.

The upper phase from the second separator, 7,232 parts, was charged to a distillation column. This column was maintained at the top at 71°C and 0,1733 bar (2.5 psia) by a vacuum system. A small amount, approximately 11 parts, of water, solvent, and ethylenediamine was lost through the vacuum system. The column had a bottoms temperature of 129°C at about 4 psia pressure. The bottoms fraction, 5,348 parts, from this distillation column contained 2,685 parts of product in the aromatic solvent. A condensed distillate fraction removed from the column contained 1,001 parts of solvent, 834 parts of ethylenediamine and 49 parts of water. This fraction was charged to the overhead separator, which was operated at about 38°C. The upper layer, 1,015 parts, of recycle solvent was recycled back to dilute the reaction mixture entering the first separator. The lower layer, containing recycle EDA, was combined with fresh make-up ethylenediamine before charging to the reaction static mixer. The final product contained about 50% solvent and less than 7 ppm chloride ion. Only about 3 weight percent of the final product is the dicarbamate of ethylenediamine. The product contained about 0.05 weight percent water and the active component (about 47 weight percent) was essentially identical to the mixed didodecylphenyl and dodecylphenyl ethers of poly(ethyloxirane)-mono[N-(2-aminoethyl)carbamate] prepared by batch methods.

### Example 2

Operating parameters were varied, widely during test runs of a pilot plant constructed to operate the process of the present invention. Typical approximate operating conditions for one run on ethylenediamine (EDA) and alkylphenylpoly(oxybutylene) chloroformate of about 1800 molecular weight in a $C_8$—$C_{10}$ aromatic solvent are found in the following Table 1 and compositions for such a run in Table II. Comparison of the % Basic N and % N values in Table II is interesting in the % Basic N is the amount of nitrogen titratable by strong acid, e.g.

amino-nitrogen, while % N is the total amount of nitrogen in the product. The relative amounts indicate the substantial formation of the desired monocarbamate.

TABLE I

| | |
|---|---|
| Chloroformate Feed Rate, ml/Min. | 60—80 |
| EDA Feed Rate, ml/Min. | 45—60 |
| EDA/Chloroformate Mole Ratio | 10:1 to 20:1 |
| Water Contents of EDA, wt% | 6—10 |
| Temperature of Separators I and II, °C | 93 |

*Product Still*

| | | |
|---|---|---|
| Overhead Pressure, Bar | 0,1226 | (92 Torr) |
| Pressure Drop, Bar | 0,0133—0,0160 | (10—12 Torr) |
| Temperature, °C | | |
| Feed | 77 | |
| Bottoms | 110 | |
| Product Distillate, ml/Min. | 80 | |
| Product Bottoms, ml/Min. | 20 | |

*EDA Flash Unit*

| | | |
|---|---|---|
| Pressure, Bar | 0,29330 | (220 Torr) |
| Temperature, °C | 121 | |
| Feed Rate, ml/Min. | 40—60 | |
| Bottoms Product Rate, ml/Min. | 2.5 | |

## TABLE II

| Stream[1] | % EDA | %Cl⁻ | % $H_2O$ | % Solvent | % Product | % Basic N | % N |
|---|---|---|---|---|---|---|---|
| Upper Phase Separator 1 | 13.00 | 32 ppm | 0.64 | 51.60 | 34.76 | — | — |
| Lower Phase Separator 1 | 68.65 | 3.64 | 16.90 | 10.81 | — | — | — |
| EDA Flasher Overhead | 75.09 | <14 ppm | 19.42 | 5.49 | — | — | — |
| Upper Phase Separator 2 | 12.14 | <14 ppm[2] | 0.70 | 51.56 | 35.60 | — | — |
| Lower Phase Separator 2 | 71.66 | 446 ppm | 16.82 | 11.48 | — | — | — |
| EDA Flasher Bottoms | 64.39 | 28.13 | 4.26 | 3.22 | — | — | — |
| Product Still Overhead | 72.95 | <14 ppm | 3.34 | 23.71 | — | — | — |
| EDA Input to Reaction Mixer | 81.96 | 342 ppm | 11.82 | 6.19 | — | — | — |
| Product Still Bottoms | — | 3 ppm | 0.04 | 59.60 | 40.36 | 0.29 | 0.52 |

[1] EDA/Chloroformate Mole Ratio approximately 20:1
All components by weight % unless ppm.

[2] Subsequent work on a more efficient semi-works separator has demonstrated
<10 ppm Cl⁻ is achievable at this point.

## Claims

1. A process for the production of a polyether monocarbamate by the reaction of a polyether chloroformate with a polyalkylene polyamine, characterised in that the polyether chloroformate reactant is employed in a hydrocarbon solvent and the polyalkylene polyamine reactant is employed in the presence of an amount of water such that after the reaction of the two reactants, the resulting product mixture separates into a hydrocarbon phase comprising hydrocarbon solvent, monocarbamate product and polyalkylene polyamine and an aqueous phase comprising polyalkylene polyamine, polyalkylene polyamine hydrochloride and water, from which hydrocarbon phase the required polyether monocarbamate can be recovered substantially free from chloride ion.

2. A process according to Claim 1, comprising the steps of:

(a) contacting and mixing at a temperature in the range from 0 to 150°C reactant streams of respectively the polyether chloroformate and polyalkylene polyamine to form a product mixture, the reactant stream of said chloroformate containing from 20 to 80 weight percent chloroformate in a hydrocarbon solvent and the reactant stream of said polyamine containing from 6 to 35 weight percent water, and the mol ratio of said polyamine to said chloroformate being in the range from 5:1 to 45:1; and

(b) allowing said product mixture to separate at a temperature in the range from 20 to 120°C into the hydrocarbon phase and the aqueous phase.

3. A process according to Claim 1 or 2, wherein the chloroformate reactant is a hydrocarbyl-terminated poly(oxyalkylene) chloroformate having an average molecular weight in the range from 500 to 10,000.

4. A process according to Claim 3, wherein said chloroformate is derived from a poly(oxyalkylene) alcohol composed of $C_2$—$C_5$ oxyalkylene units.

5. A process according to Claim 4, wherein said poly(oxyalkylene) alcohol is a $C_1$—$C_{30}$ hydrocarbyl-terminated poly(oxyalkylene) alcohol.

6. A process according to Claim 5, wherein said $C_1$—$C_{30}$ hydrocarbyl group is an alkylphenyl group.

7. A process according to Claim 6, wherein the poly(oxyalkylene) unit is selected from poly(oxypropylene), poly(oxybutylene) and poly(oxypentylene) units.

8. A process according to any preceding claim, wherein the polyalkylene polyamine contains from 2 to 10 carbon atoms and from 2 to 5 nitrogen atoms.

9. A process according to Claim 8, wherein the polyalkylene polyamine contains $C_2$—$C_6$ alkylene units.

10. A process according to Claim 9, wherein the polyalkylene polyamine is ethylenediamine, diethylenetriamine, triethylenetetramine or tetraethylenepentamine.

11. A process according to any preceding claim, wherein said hydrocarbon solvent is an aromatic solvent having from 6 to 16 carbon atoms.

12. A process according to Claim 11, wherein the hydrocarbon solvent is a xylene, ethylbenzene, cumene or other $C_9$—$C_{10}$ alkylbenzene.

13. A process according to any preceding claim, wherein the polyalkylene polyamine present in said aqueous phase is recovered by vaporization and recycled as polyalkylene polyamine reactant.

14. A process according to Claim 13, wherein a portion of the recovered polyalkylene polyamine containing 10 to 20 weight percent water is mixed with said hydrocarbon phase and the resulting two phase mixture allowed to separate at a temperature in the range from 80—110°C.

15. A fuel composition comprising a hydrocarbon fuel boiling in the gasoline range and a polyether carbamate produced by the process claimed in any preceding claim.

## Revendications

1. Procédé pour la préparation d'un polyéther-monocarbamate par la réaction d'un polyéther-chloroformiate avec une polyalkylène-polyamine, caractérisé par le fait que le réactif polyéther-chloroformiate est utilisé dans un solvant hydrocarbure et le réactif polyalkylène-polyamine est utilisé en présence d'une quantité d'eau telle, que après la réaction des deux réactifs, le mélange des produits résultant se sépare en une phase hydrocarbure comprenant le solvant hydrocarbure, le produit monocarbamate et de la polyalkylène-polyamine et en une phase aqueuse comprenant de la polyalkylène-polyamine, du chlorhydrate de polyalkylène-polyamine et de l'eau, et qu'à partir de la phase hydrocarbure, le polyéther-monocarbamate cherché peut être recueilli pratiquement exempt d'ion chlorure.

2. Procédé selon la revendication 1, comprenant les stades suivants:

(a) mise en contact et mélangeage à une température allant de 0 à 150°C des flux réactifs respectivement du polyéther-chloroformiate et de la polyalkylène-polyamine pour former un mélange de produits, le flux réactif dudit chloroformiate contenant de 20 à 80% en poids de chloroformiate dans un solvant hydrocarbure, et le flux réactif de ladite polyamine contenant de 6 à 35% en poids d'eau, et le rapport molaire de ladite polyamine audit chloroformiate allant de 5:1 à 45:1, et

(b) abandon dudit mélange de produits pour que, à une température allant de 20° à 120°C, il se sépare en la phase hydrocarbure et en la phase aqueuse.

3. Procédé selon les revendications 1 ou 2, dans lequel le réactif chloroformiate est un poly-(oxyalkylène) chloroformiate terminé par un groupe hydrocarbyle, ayant un poids moléculaire allant de 500 à 10 000.

4. Procédé selon la revendication 3, dans lequel ledit chloroformiate provient d'un poly-(oxyalkylène)-alcool composé de groupements oxyalkylène en $C_2$—$C_5$.

5. Procédé selon la revendication 4, dans lequel ledit poly(oxyalkylène)-alcool est un poly-(oxyalkylène)-alcool terminé par un groupe hydrocarbyle en $C_1$—$C_{30}$.

6. Procédé selon la revendication 5, dans lequel ledit groupe hydrocarbyle en $C_1$—$C_{30}$ est un groupe alkylphényle.

7. Procédé selon la revendication 6, dans lequel le groupement poly(oxyalkylène) est choisi parmi les groupements poly(oxy-propylène), poly(oxybutylène) et poly(oxy-pentylène).

8. Procédé selon l'une quelconque des revendications précédentes, dans lequel la polyalkylène-polyamine contient de 2 à 10 atomes de carbone et de 2 à 5 atomes d'azote.

9. Procédé selon la revendication 8, dans lequel la polyalkylène-polyamine contient des groupements alkylène en $C_2$—$C_6$.

10. Procédé selon la revendication 9, dans lequel la poylalkylène-polyamine est l'éthylène-diamine, la diéthylènetriamine, la triéthylène-tétramine ou la tétraéthylènepentamine.

11. Procédé selon l'une quelconque des revendications précédentes, dans lequel ledit solvant hydrocarbure est un solvant aromatique ayant de 6 à 16 atomes de carbone.

12. Procédé selon la revendication 11, dans lequel le solvant hydrocarbure est un xylène, l'éthylbenzène, le cumène ou un autre alkyl-benzène en $C_9$—$C_{10}$.

13. Procédé selon l'une quelconque des revendications précédentes, dans lequel la polyalkylène-polyamine présente dans ladite phase aqueuse est récupérée par vaporisation et recyclée comme réactif polyalkylène-polyamine.

14. Procédé selon la revendication 13, dans lequel une partie de la polyalkylène-polyamine récupérée contenant 10 à 20% en poids d'eau est mélangée avec ladite phase hydrocarbure et le mélange des deux phases résultant est laissé se séparer à une température allant de 80° à 110°C.

15. Composition combustible comprenant un combustible hydrocarbure bouillant dans le domaine de l'essence et un polyéther-carbamate préparé par le procédé décrit dans l'une quelconque des revendications précédentes.

## Patentansprüche

1. Verfahren zur Herstellung eines Polyethermonocarbamats durch Reaktion eines Polyether-chlorameisensäureesters mit einem Polyalkylen-polyamin, dadurch gekennzeichnet, daß der als Ausgangsstoff verwendete Poly-ether-chlorameisensäureester in einem Kohlen-wasserstoff-Lösungsmittel und das als Aus-gangsstoff verwendete Polyalkylenpolyamin in Gegenwart einer Wasser-Menge eingesetzt werden, so daß nach der Umsetzung der beiden Reaktionsteilnehmer sich das erhaltene Produkt-Gemisch in eine Kohlenwasserstoff-Phase, die das Kohlenwasserstoff-Lösungsmittel, das Monocarbamat-Produkt und Polyalkylenpolyamin umfaßt, und eine wäßrige Phase, die Poly-alkylen-polyamin, Polyalkylenpolyamin-hydro-chlorid und Wasser umfaßt, trennt, wobei das benötigte Polyethermonocarbamat aus der Kohlenwasserstoff-Phase im wesentlichen frei von Chlorid-Ionen gewonnen werden kann.

2. Verfahren nach Anspruch 1, dadurch gekennzeichnet, daß im Schritt

(a) bei einer Temperatur im Bereich von 0°C bis 150°C die Ströme der Ausgangs-stoffe, des betreffenden Polyether-chlorameisen-säureesters und des betreffenden Polyalkylen-polyamins, zur Bildung des Produkt-Gemischs miteinander in Berührung gebracht und vermischt werden, wobei der Ausgangsstoff-Strom des Chlorameisensäureesters 20 bis 80 Gew.-% des Chlorameisensäureesters in einem Kohlenwasserstoff-Lösungsmittel enthält und der Ausgangsstoff-Strom des Polyamins 6 bis 35 Gew.-% Wasser enthält und das Stoffmengen-Verhältnis des Polyamins zu dem Chlorameisensäureester im Bereich von 5:1 bis 45:1 liegt, und im Schritt

(b) bei einer Temperatur im Bereich von 20°C bis 120°C dem Produkt-Gemisch die Möglichkeit zur Trennung in die Kohlenwasserstoff-Phase und die wäßrige Phase gegeben wird.

3. Verfahren nach Anspruch 1 oder 2, da-durch gekennzeichnet, daß der Chlorameisen-säureester-Ausgangsstoff ein Poly(oxyalkylen)-chlorameisensäureester mit einem endständigen Kohlenwasserstoff-Rest und einem mittleren Molekulargewicht im Bereich von 500 bis 10 000 ist.

4. Verfahren nach Anspruch 3, dadurch gekennzeichnet, daß der Chlorameisensäureester sich von einem aus $C_2$- bis $C_5$-Oxyalkylen-Einheiten zusammengesetzten Poly-(oxyalkylen)alkohol ableitet.

5. Verfahren nach Anspruch 4, dadurch gekennzeichnet, daß der Poly(oxyalkylen)alkohol ein Poly(oxyalkylen)alkohol mit einem end-ständigen $C_1$- bis $C_{30}$-Kohlenwasserstoff-Rest ist.

6. Verfahren nach Anspruch 5, dadurch gekennzeichnet, daß der $C_1$- bis $C_{30}$-Kohlen-wasserstoff-Rest eine Alkylphenyl-Gruppe ist.

7. Verfahren nach Anspruch 6, dadurch gekennzeichnet, daß die Poly(oxyalkylen)-Einheit ausgewählt ist aus Poly(oxypropylen)-, Poly(oxybutylen)- und Poly(oxypentylen)-Einheiten.

8. Verfahren nach Anspruch 1 bis 7, dadurch gekennzeichnet, daß das Polyalkylen-polyamin 2 bis 10 Kohlenstoff-Atome und 2 bis 5 Stickstoff-Atome enthält.

9. Verfahren nach Anspruch 8, dadurch gekennzeichnet, daß das Polyalkylen-polyamin $C_2$- bis $C_6$-Alkylen-Einheiten enthält.

10. Verfahren nach Anspruch 9, dadurch gekennzeichnet, daß das Polyalkylen-polyamin Ethylendiamin, Diethylentriamin, Triethylentetramin oder Tetraethylenpenatmin ist.

11. Verfahren nach Anspruch 1 bis 10, dadurch gekennzeichnet, daß das Kohlenwasserstoff-Lösungsmittel ein aromatisches Lösungsmittel mit 6 bis 16 Kohlenstoff-Atomen ist.

12. Verfahren nach Anspruch 11, dadurch gekennzeichnet, daß das Kohlenwasserstoff-Lösungsmittel Xylol, Ethylbenzol, Cumol oder ein anderes $C_9$- bis $C_{10}$-Alkylbenzol ist.

13. Verfahren nach Anspruch 1 bis 12, dadurch gekennzeichnet, daß das in der wäßrigen Phase vorhandene Polyalkylen-polyamin durch Verdampfung zurückgewonnen und als Polyalkylen-polyamin-Ausgangsstoff in den Kreislauf zurückgeführt wird.

14. Verfahren nach Anspruch 13, dadurch gekennzeichnet, daß ein Teil des zurückgewonnenen Polyalkylen-polyamins, das 10 bis 20 Gew.-% Wasser enthält, mit der Kohlenwasserstoff-Phase gemischt wird und der erhaltenen zweiphasigen Mischung die Möglichkeit gegeben wird, sich bei einer Temperatur im Bereich von 80°C bis 110°C zu trennen.

15. Brennstoff-Zusammensetzung aus einem im Benzin-Bereich siedenden Kohlenwasserstoff-Brennstoff und einem mittels eines Verfahren nach Anspruch 1 bis 14 hergestellten Polyethercarbamat.